# EUROPEAN PATENT APPLICATION

(11) **EP 1 657 563 A2**
(43) Date of publication of application: **17.05.2006**
(21) Application number: 05019544.5
(22) Date of filing: 08.09.2005
(51) Int. Cl.: G01S 7/52, G01S 15/89

(54) **Aberration correction beam patterns in ultrasonic imaging systems**

(30) Priority: 16.11.2004 US 989592
(71) Applicant: Siemens Medical Solutions USA, Inc., Malvern, PA 19355-1406 (US)
(72) Inventor: D-L Donald, Liu, 98027 Issaquah WA (US)
(74) Representative: Neill, Andrew Peter

(57) **Abstract**

For imaging, broad transmit beams (50) are used to increase frame rate. Two or more receive beams (52) are formed in response to each of the broad beam transmit operations. For aberration correction (34), narrow transmit beams (54) are used, such as a beam associated with receiving along a single scan line (52). By altering a pulse shape or delay profile, the broad and narrow beam patterns are generated. The wavefront coherence of a narrow beam (54) allows for accurate determination of relative time delay differences or other aberration corrections. The narrowly focused transmit beams (54) are directed automatically towards special targets, such as isolated point targets, to further enhance backscattering coherence. The wide transmit beams (50) and associated wavefront allow for more rapid scanning of a two-dimensional area or a three-dimensional volume. Interleaving the two different types of transmit beams (50, 54) allows for use of aberration correction (34) to increase resolution and reduced clutter levels while more quickly scanning a region.

## Description

### BACKGROUND

The embodiments described below relate to aberration correction. In particular, aberration correction is provided for ultrasound imaging.

For medical diagnostic ultrasound imaging, aberrations are caused by inhomogeneities that exist in tissue. Such inhomogeneities arise from different tissue compositions, such as skin, fat, muscle, connective tissue, bone or others. The different tissue compositions cause variations in density and compressibility, leading to variations in the speed of sound and acoustic impedance. Transmitted and received ultrasound beams are broadened with raised sidelobe levels due to the variations. As a result, images may have lower resolution and higher clutter levels.

The effect of inhomogeneities may be reduced through aberration correction. The inhomogeneities are identified. Delays and/or apodization profiles are adjusted for subsequent transmit or receive beam formation to counteract the aberrations. Optimum aberration correction may be provided by fine resolution or dense spatial sampling with independent processing of data for each channel.

In addition to tissue aberrations, using broad transmit beams may lower resolution and increase clutter levels. Broad transmit beams increase the volume or frame scan rate. For example, multiple receive beams are formed in response to a single transmit beam.

### BRIEF SUMMARY

By way of introduction, the preferred embodiments described below include methods and systems for aberration correction in ultrasound imaging. For imaging, broad transmit beams are used to increase frame rate. Two or more receive beams are formed in response to each of the broad beam transmit operations. For aberration correction, narrow transmit beams are used, such as a beam associated with receiving along a single scan line. By altering a pulse shape or delay profile, the broad and narrow beam patterns are generated. The wavefront coherence of a narrow beam allows for accurate determination of relative time delay differences or other aberration corrections. The wide transmit beams and associated wavefront allow for more rapid scanning of a two-dimensional area or a three-dimensional volume. Interleaving the two different types of transmit beams allows for use of aberration correction to increase resolution and reduced clutter levels while more quickly scanning a region.

In a first aspect, a method is provided for aberration correction in ultrasound imaging. A first wavefront is transmitted from a multi-element transducer array. Aberration correction is determined as a function of data responsive to the transmission. A second wavefront is transmitted from the multi-dimensional transducer array. The second wavefront is responsive to the aberration correction and different than the first wavefront as a function of delay, pulse shape or both delay and pulse shape in addition to the aberration correction. An image is generated as a function of data responsive to the second wavefront.

In a second aspect, a system is provided for aberration correction in ultrasound imaging. A transmitter is operable to transmit a first ultrasound wavefront to a focal region from a multi-element transducer array. A processor is operable to determine an aberration correction as a function of data responsive to the transmission of the first wavefront. The transmitter is operable to transmit a second ultrasound wavefront to the focal region from the multi-element transducer array. The second ultrasound wavefront is responsive to the aberration correction and different than the first ultrasound wavefront as a function of a delay, a pulse shape or combinations thereof in addition to the aberration correction. An image processor is operable to generate an image as a function of data responsive to the second ultrasound wavefront.

In a third aspect, a method for aberration correction in ultrasound imaging is provided. At least one narrow beam having a focal depth is transmitted. Information in response to the transmission of the narrow beam is received. An aberration correction value is determined as a function of the received information. A broad beam is transmitted over the focal depth. Additional information is received along a plurality of receive beams in response to the transmission of the broad beam. An image is generated in response to the additional information. The transmission of the broad beam, associated reception or both transmission and reception are performed as a function of the aberration correction value.

The present invention is defined by the following claims, and nothing in this section should be taken as a limitation on those claims. Further aspects and advantages of the invention are discussed below in conjunction with the preferred embodiments and may be later claimed in combination or independently.

### BRIEF DESCRIPTION OF THE DRAWINGS

The components and the figures are not necessarily to scale, emphasis instead being placed upon illustrating the principles of the invention. Moreover, in the figures, like reference numerals designate corresponding parts throughout the different views.

Figure 1 is a block diagram of one embodiment of an ultrasound system for aberration correction;

Figure 2 is a flow chart diagram of one embodiment of a method for performing aberration correction in ultrasound imaging; and

Figure 3 is a timing diagram representing relative timing of the transmission of different beam patterns in one embodiment.

### DETAILED DESCRIPTION OF THE DRAWINGS AND PRESENTLY

### PREFERRED EMBODIMENTS

Different acoustic wavefronts are transmitted for imaging and aberration correction. Imaging wavefronts are broad or weakly focused so that multiple receive beams can be formed simultaneously to increase frame rate. A tightly focused transmit beam may lead to signals that are more coherent across an aperture, since the spatial coherence of back scattered signals is proportional to the Fourier transform of the transmit beam profile. More tightly focused or narrow focused transmit beams are periodically transmitted, and data received in response to the narrow or more focused beams is used to determine an aberration estimation. Relative time delay differences in an aperture are identified. The aberration corrections are then applied for transmit, receive or both transmit and receive operations performed for imaging, such as adding aberration delay corrections to a transmit beam delay profile for transmitting a broad beam associated with a plurality of receive beams.

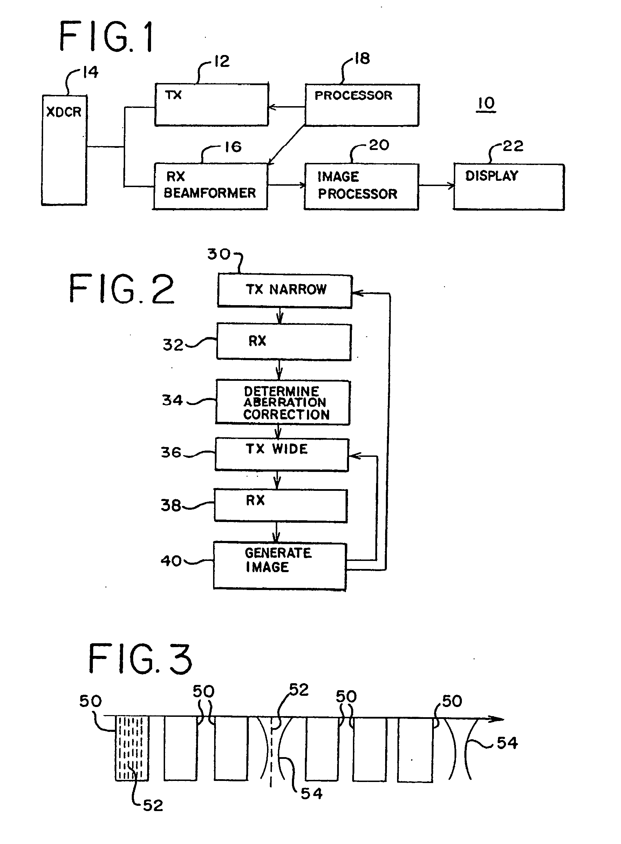

Figure 1 shows one embodiment of a system 10 for aberration correction in ultrasound imaging. The system 10 includes a transmitter 12, a transducer 14, a receive beamformer 16, a processor 18, an image processor 20, and a display 22. Alternatively, the receive beamformer 16 and image processor 20 may be combined in a single processing unit that performs both aberration estimation and image formation using the received echo data. Additional, different or fewer components may be provided. For example, one or more filters are provided for summing, subtracting, multiplying or otherwise processing data to identify information at desired frequency bands. In one embodiment, the system 10 is a medical diagnostic ultrasound imaging system. In some embodiments, the system 10 is an ultrasound system operable to scan a volume on a patient, such as associated with real time three-dimensional imaging.

The transmitter 12 is a transmit beamformer, pulser, waveform generator, combinations thereof or other now known or later developed transmitter for generating one or more waveforms at ultrasound frequencies. The transmitter 12 connects with a single element or a plurality of elements for broad beam transmission and connects with a plurality of elements for narrow beam transmission. A separate waveform is generated for each of the elements. Each of the waveforms are relatively delayed and apodized by digital or analog delays, timing of the waveform generation, amplifiers, amplitude of the waveform generation or other structures for providing waveforms with desired focus and beam pattern. Switches for aperture selection may additionally or alternatively be used.

The transducer 14 is a multi-element transducer array, such as a one-dimensional, 1.25, 1.5, 1.75 or two-dimensional ultrasound imaging array. The elements are piezoelectric material or capacitive membrane elements. The elements are arranged with sparse or full sampling along one or two-dimensional grids. For scanning a volume in one embodiment, the elements are arranged along a two-dimensional rectangular, triangular or hexagonal grid. For fine spatial sampling, each of the elements is spaced along the azimuth and elevation dimensions with about one-half the wavelength spacing. For use as a one-dimensional array, the elevation extent of the elements may be greater than one-half a wavelength, but is about one-half of a wavelength in other embodiments. Greater or smaller spacing may be provided for multi-dimensional or one-dimensional arrays.

Using a multiplexer or other structure, the waveforms generated by the transmitter 12 are provided to the transducer 14. One or more elements of the transducer 14 are connected with the channels of the transmitter 12 for generating an acoustic beam with the desired beam pattern. The acoustic beam is transmitted away from the transducer along a given direction and over the given space or width.

The transmitted acoustic beam extends to and past a focal region. The focal region may be associated with a point, area or volume. The focal region corresponds to a most coherent region associated with the transmitted beam, such as where the minus 6dB or other cutoff for defining a beam width is most narrow. For some broad beam transmissions, a focal region is not provided.

For receive, transmit or both receive and transmit beam formation, a region to be scanned is associated with scan lines. For example, broad or narrow transmit beams are transmitted along different scan lines sequentially. The same or different scan lines are used on transmit than on receive. In response to broad transmit beams, more than one receive beam may be generated simultaneously or substantially simultaneously in response to a same transmit beam. For narrow beam operation, fewer receive beams are formed for each transmit beam, such as one receive beam being formed for a given transmit beam. Broad beam transmissions may cover a plurality of receive scan lines. A broad beam transmission may also cover a focal region in a scan line used for a narrow beam transmission. For example, the broad transmit beam extends over a greater spatial extent at a same or different angle as the scan line for a narrow transmit beam.

The transmitter 12 is operable to transmit wavefronts that cover or extend over various regions but with different widths or relative amounts of focusing. By altering a relative delay profile, pulse shape, frequency, apodization or combinations thereof, the beam pattern width at a given region may be increased or decreased. For example, the transmit delay profile is changed to provide broad transmit beams for imaging and narrow transmit beams for aberration estimation. Broad transmit beams include plane waves, wavefronts emulating a single point source, wavefronts corresponding to a virtual point source positioned along the array, behind the array, or an infinite distance behind the array, or wavefronts just wide enough to cover two or more receive beams. Broad versus narrow are provided as relative terms. For example, a narrow transmit beam pattern covers a single scan line while a broad transmit beam pattern covers two or more scan lines. As another example, a narrow transmit beam pattern covers two scan lines and the broad transmit beam pattern covers three or more scan lines. The narrow beam pattern is more tightly focused to only cover a first number of receive scan lines while the broad beam pattern is more weakly focused to cover a greater number of receive scan lines.

One or more transmit beams are generated to scan an entire two- or three-dimensional region for imaging. The scans are repeated for real-time or sequential images. Interleaved with the imaging transmissions are transmissions and receptions for aberration correction. Transmissions for aberration correction are performed between each entire scan for imaging, between multiple groups of scans for imaging, between transmissions of beams for only scanning a portion of a region or at other frequencies. The aberration correction scans correspond to scanning an entire region, scanning the entire region multiple times, or only scanning a portion of the region being imaged. In one embodiment, transmissions associated with aberration correction are performed once every half to one second interleaved with transmissions for imaging. As an alternative to regular or periodic interleaving, interleaving in response to irregular triggers, such as in response to user activation, may be provided. A greater or lesser frequency for aberration correction scanning may be provided, such as a function of the rate of change of transducer or tissue positions.

The receive beamformer 16 includes amplifiers, delays, and one or more summers. The receive beamformer 16 receives reflected echo signals converted into electrical signals from the transducer 14. The received signals are relatively weighted or apodized and delayed to provide focusing. The relatively delayed and apodized information is summed to generate data representing a beam. In sequential or parallel processes, multiple receive beams may be generated in response to the same echo signals. In one embodiment, the receive beamformer 16 is a general purpose processor or digital signal processors for performing programmable processes on the data received in each channel. Application specific integrated circuits or other structures may be used for separately processing information for each of the channels. In yet another alternative embodiment, the receive beamformer 16 is a general processor for generating data along a plurality of scan lines or locations using Fourier transforms or other processing associated with plane wave transmissions.

The processor 18 is a general processor, digital signal processor, application specific integrated circuit, field programmable gate array, analog circuit, digital circuit or other now known or later developed device for determining aberration corrections or controlling operation of the transmitter 12 and/or receive beamformer 16. The processor 18 may be a controller for the transmitter 12 or the receive beamformer 16. The processor 18 is operable to determine aberration corrections as a function of data responsive to transmissions with a tight or narrow focus. In various embodiments, the processor 18 is any one of the aberration correction devices disclosed in U.S. Patent Nos. 5,570,691, 6,682,487 or 6,023,977, the disclosures of which are herein incorporated by reference. Focusing phase or delay and/or amplitude correction estimates are generated by the processor 18. Relative phases of adjacent elements are measured and converted to a time delay. Any now known or later developed aberration correction technique may be used. The amplitude and delay differences between elements or between subarrays are measured to provide aberration correction estimates.

The aberration corrections may be based on the scan of the entire region of interest or only portions of the imaging region of interest. Aberration corrections for other regions may be interpolated or extrapolated from region scanned for the purpose of aberration correction.

The processor 18 provides delay, apodization or both delay and apodization corrections for transmission, reception or both transmission and reception of wavefronts for imaging. The processor 18 outputs delay and/or apodization profile adjustments to the transmitter 12 and/or the receive beamformer 16 for use in subsequent imaging transmissions and/or receptions.

The image processor 20 receives beam formed data as opposed to the channel data provided to processor 18. The image processor 20 is a detector, such as a B-mode or Doppler detector, a scan converter, a three-dimensional processor, a memory, a filter, combinations thereof or other now known or later developed image processors for generating an image from received beam formed data. For example, the image processor 20 includes a three-dimensional processor for generating a representation of a volume scanned by the transmitter 12 and the receive beamformer 16. The data along a plurality of receive scan lines is reconstructed along a three-dimensional grid. Volume rendering or other rendering techniques are used to generate a representation of the three-dimensional volume from a given viewing angle. Other three-dimensional processes may be used. Using broad transmit beam patterns, a volume for imaging may be more rapidly scanned. As a result, more rapid frame rate for three-dimensional imaging may be provided. In alternative embodiments, the image processor 20 generates two-dimensional images in response to scans of a three or two-dimensional region. The images generated are responsive to wavefronts or transmissions and receptions performed for imaging, such as transmissions with the weakly focused beam pattern.

The display 22 is a CRT, monitor, flat screen, LCD, projector or other now known or later developed display device. The image generated by the image processor 20 is output to the display 22 for viewing by the user.

Figure 2 shows one embodiment of a method for aberration correction in ultrasound imaging. The method is implemented using the system 10 shown in Figure 1 or a different system. Additional, different or fewer acts then shown in Figure 2 may be provided. The method provides for determining aberration corrections with more tightly focused transmissions and performing imaging in response to the aberration corrections with more weakly focus or broader transmit beam patterns.

In act 30, one or more wavefronts are transmitted for aberration correction. The wavefronts have a narrow beam profile at a focal depth. The narrow beam profile is obtained by altering a frequency, pulse shape, delay profile or combinations thereof.

In one embodiment, the narrow transmit beams are focused at one or more regions identified by a user. For example, a user indicates bright isolated targets or other regions likely associated with aberrations based on a displayed image acquired with different or no aberration correction. In an alternative embodiment, bright targets or other isolated areas associated with possible aberrations are automatically identified with a processor. For example, an image is divided into multiple smaller regions. A peak associated with each of the regions is identified. Adjacent pixels or the peaks of the adjacent blocks are examined to find the brightest peaks associated with the darkest surroundings. For example, if the next brightest peak that is away from the immediate neighborhood of the original peak has a level that is below a certain threshold, then the original peak may be classified as an isolated point target. One or more of the brightest isolated peaks are then selected for focusing the narrow transmit beams for aberration correction. The narrow transmit beams for aberration correction are focused at the identified regions. Thin structures aligned along beam axis, such as vertical or radial alignment, may alternatively or additionally be used for aberration estimation. These features can be automatically identified using pattern recognition and/or image processing techniques. As an alternative to processor or user determined focal regions, an entire volume or area is sampled with a lesser sampling density than used for imaging for aberration correction. In yet another alternative embodiment, the entire area or volume is scanned with a same or greater density for aberration correction than for imaging.

In act 32, information is received in response to the transmission of the narrow beams. For example, echo signals responsive to the transmitted waveform are received for a single receive beam.

In act 34, aberration corrections are determined as a function of the data received in response to the narrow transmit beams. Aberration corrections are determined for different lateral spatial locations in response to different transmit beams. For a given location, the receive data for each channel or subaperture is analyzed to determine differences in delay and/or amplitude. The differences in delay or amplitude are used to determine delay, apodization or both delay and apodization corrections. The corrections are provided for subsequent transmission, reception or both transmission and reception. The corrections are added or subtracted from the delay and apodization profiles used to generate the subsequent transmit or receive beams.

Acts 36, 38 and 40 result in the generation of an image. To increase frame rate, transmit beams are broaden to accommodate multiple receive beams. By providing a broad transmit beam, the weaker focus results in a reduction in signal redundancy. The reduction in signal redundancy results in images more sensitive to aberration effects. The aberration corrections determined in act 34 are used to minimize the aberration effects. One or more of the transmit and receive wavefronts and associated beams pass through the same regions scanned in acts 30 and 32 for determining the aberration corrections in act 34. For other regions, the aberration corrections may be interpolated, extrapolated or not provided. A single set of corrections or averaged corrections may be used for broad beam transmissions covering multiple lateral locations.

In act 36, a wavefront is transmitted from the multi-element transducer array. The wavefront is responsive to aberration corrections in addition to delay profile and apodization profile. The wavefront used for imaging in act 36 is different than the wavefront used for transmission to determine aberration corrections in act 36 even though transmitted to cover a same region and/or along a same scan line. The difference is provided as one of delay, pulse shaping, frequency or combinations thereof. The difference results in a wider beam profile even at a narrowest or focal region within the scanned or imaged area. Where transmitted along a same scan line, the difference in pulse shape, delay profile or frequency in addition to differences due to the aberration corrections provide the wider beam pattern. For example in scanning a three-dimensional volume, a more narrow transmit beam is provided in act 30 for receiving along a single scan line. In act 36, a transmit beam with sufficient width at a narrowest location is provided for covering 8 or more receive scan lines. Sufficient acoustic energy is transmitted along each of the receive lines to allow for higher resolution receive information.

The transmitted wavefront in act 36 may be along a different scan line than the transmission in act 30. As a result, different delay patterns or apodization patterns may be provided. Due to further differences in delay and/or apodization, the transmission in act 36 for imaging with a wide beam pattern covers the same region as the transmitted beam with the narrow profile in act 30. For example, the wider beam covers the same focal region used for the transmission of the tightly focused beam in act 30. The wavefront used for imaging is a plane wave, a wave emulating a point source using a multi-element array, or a focused wavefront with a wider extent at the focal region than used for aberration correction. For example, the width of the transmitted wavefront is adapted to cover two or more scan lines to be used for simultaneous generation of receive beams. Where a focal region is provided for both aberration correction and imaging transmissions, the focal points may be at a same or different depth or lateral location for the weakly focused and tightly focused beam patterns.

In act 38, information is received along a plurality of scan lines in response to the broad transmitted beam or wavefront of act 36. Transmitted acoustic energy reflects off of structures or tissue along the transmit beam. Echoes that impinge on the transducer are received and used to simultaneously or substantially simultaneously generate a plurality of receive beams along multiple scan lines. For example, 2, 3, 4, 8 or more receive beams are formed in response to each transmitted broad beam. In one embodiment, the entire region of a two-dimensional scan, the entire volume of a three-dimensional scan, or an entire plane within a three-dimensional scan is covered by the transmission and associated receive beams generated in response to a single transmission. In alternative embodiments, sub-areas, sub-volumes or other lesser regions are scanned or used to generate receive beams in response to a single transmission. The transmission of act 36 and associated receive act 38 are repetitively performed to scan an entire region of interest for imaging.

In act 40, an image is generated as a function of the data received in act 38. The data received corresponds to a plurality of received beams along a plurality of scan lines within the region of interest. After two-dimensional scan conversion or three-dimensional reconstruction, an image is generated for display. By correcting for aberrations, a higher resolution with lesser clutter level may be provided. Since broad beams are used for generating image data, an increased frame rate as opposed to using narrow beams is provided. For three-dimensional imaging, real-time or close to real-time scanning of the volume and generation of images may be provided. The resulting three-dimensional representation will have fewer artifacts associated with aberrations.

As shown in Figures 2 and 3, after an image is generated in act 40, the process returns either to act 36 for continuous generation of images or returns to act 30 for acquisition of further aberration correction information. In Figure 3, each broad beam 50 represents a broad transmission covering a plurality of scan lines 52 for forming receive beams. For example, each broad beam 50 is a broad transmit beam covering an entire region of interest for imaging. Multiple such transmit beams are sequentially transmitted for forming sequential images. As shown in Figure 3, three such broad transmit beams 50 are generated before acquiring further data associated with aberration correction. The transmission of a narrow beam 54 is performed along a single scan line 52. A plurality of such narrow transmit beams 54 may occur sequentially before transmissions associated with imaging. While a periodic acquisition for aberration correction is shown in Figure 3, a non-periodic acquisition may be provided. For images generated after the transmission of a narrow beam 54, the images are responsive to aberration corrections determined as a function of the narrow beam 54. In an alternative embodiment represented by Figure 3, each of the broad transmit beams 50 is associated with a different region within the imaging region of interest. The narrow transmit beams 54 used for aberration correction are interleaved with the broad transmit beams 50 throughout transmissions to form a single image.

In another embodiment for use with either of narrow or broad transmit beams for imaging, aberration correction targets are automatically identified. Starting with a current image, which may be formed conventionally with no aberration correction or with some correction already applied, isolated point targets or laterally narrow features are automatically identified as discussed above. Narrowly focused transmit beams are directed at these targets, and corresponding channel data is received. Aberration corrections are estimated using the received data that corresponds to each location. The aberration corrections are spatially interpolated for other spatial locations.
The estimated and/or interpolated corrections are applied for transmit and/or receive operations for subsequent imaging, whether the imaging uses broad transmit beams or narrowly focused beams.

While the invention has been described above by reference to various embodiments, it should be understood that many changes and modifications can be made without departing from the scope of the invention. It is therefore intended that the foregoing detailed description be regarded as illustrative rather than limiting, and that it be understood that it is the following claims, including all equivalents, that are intended to define the spirit and scope of this invention.

## Claims

1. A method for aberration correction in ultrasound imaging, the method comprising:
(a) transmitting (30) a first wavefront from a multi-element transducer array (14);
(b) determining (34) an aberration correction as a function of data responsive to (a);
(c) transmitting (36) a second wavefront from the multi-element transducer array (14), the second wavefront responsive to the aberration correction and different than the first wavefront as a function of a delay, a pulse shape or combinations thereof in addition to the aberration correction; and
(d) generating (40) an image as a function of data responsive to (c).

2. The method of Claim 2 wherein (c) comprises transmitting (36) the second wavefront with a different delay profile in addition to the aberration correction than the first wavefront.

3. The method of Claim 2 wherein (a) comprises transmitting (30) the first wavefront with a tightly focused beam pattern relative to the second wavefront and (c) comprise transmitting (36) the second wavefront with a weakly focused beam pattern relative to the tightly focused beam pattern.

4. The method of Claim 2 wherein (a) comprises transmitting (30) the first wavefront with a narrow beam pattern at a first focal point and (c) comprises transmitting (36) the second wavefront with a wide beam pattern at a second focal point, the first and second focal points having a same or different depth.

5. The method of Claim 1 wherein (a) comprises transmitting (30) the first wavefront with a first beam pattern only wide enough at a focal region to cover a first number of receive lines (52) and wherein (c) comprise transmitting (36) the second wavefront with a second beam pattern wide enough at the focal region to cover a second number of receive lines (52), the second number being greater than the first number.

6. The method of Claim 5 wherein (a) comprises transmitting (30) the first wavefront with the first beam pattern only wide enough at the focal region to cover one or two receive lines (52) and wherein (c) comprises transmitting (36) the second wavefront with the second beam pattern wide enough at the focal region to cover eight or more receive lines (52).

7. The method of Claim 1 wherein (a) comprises transmitting (30) acoustic energy covering a first scan line (52), wherein (c) comprises transmitting (32) acoustic energy covering the first scan line (52) and wherein (b) comprises determining (34) delay, apodization or delay and apodization corrections for the transmission of (c) or reception of information responsive to the transmission of (c).

8. The method of Claim 1 wherein (c) comprises transmitting (36) the second wavefront as a plane wave and wherein (d) comprises generating (40) a three-dimensional representation.

9. The method of Claim 1 further comprising:
(e) repeating (c) and (d); and
(f) repeating (a) and (b) for each of a plurality of the repeats of (e), the aberration correction for a given repeat of (a) and (b) being used for the plurality of the repeats of (e).

10. The method of Claim 1 further comprising:
(e) identifying a region as a function of user input; and
(f) focusing the first wavefront at the region.

11. The method of Claim 1 further comprising:
(e) identifying a region automatically with a processor (18); and
(f) focusing the first wavefront at the region.

12. A system (10) for aberration correction in ultrasound imaging, the system (10) comprising:
a multi-element transducer array (14);
a transmitter (12) operable to transmit a first ultrasound wavefront to a focal region from the multi-element transducer array (14);
a processor (18) operable to determine an aberration correction as a function of data responsive to transmission of the first ultrasound wavefront;
wherein the transmitter (12) is operable to transmit a second ultrasound wavefront to the focal region from the multi-element transducer array (14), the second ultrasound wavefront responsive to the aberration correction and different than the first ultrasound wavefront as a function of a delay, a pulse shape or combinations thereof in addition to the aberration correction; and
an image processor (20) operable to generate an image as a function of data responsive to the second ultrasound wavefront.

13. The system (10) of Claim 12 wherein the transmitter (12) is operable to transmit the first wavefront with a more tightly focused beam pattern relative to the second wavefront at the focal region and operable to transmit the second wavefront with a more weakly focused beam pattern relative to the tightly focused beam pattern at the focal region.

14. The system (10) of Claim 12 wherein the transmitter (12) is operable to transmit the first wavefront with a first beam pattern only wide enough at a focal region to cover a first number of receive lines (52) and operable to transmit the second wavefront with a second beam pattern wide enough at the focal region to cover a second number of receive lines (52), the second number being greater than the first number.

15. The system (10) of Claim 12 wherein the transmitter (12) is operable to transmit the first and second ultrasound wavefronts to cover a first scan line (52) and wherein the processor (18) is operable to determine delay, apodization or delay and apodization corrections for the transmission of the second wavefront, reception of information responsive to the transmission of the second wavefront or combinations thereof.

16. The system (10) of Claim 12 wherein the transmitter (12) is operable to transmit the second wavefront as a plane wave and wherein the image processor (20) is operable to generate a three-dimensional representation.

17. A method for aberration correction in ultrasound imaging, the method comprising:
(a) transmitting (30) at least one narrow beam having a focal depth;
(b) receiving (32) first information in response to the transmission of the narrow beam;
(c) determining (34) an aberration correction value as a function of the first information;
(d) transmitting (36) a broad beam over the focal depth;
(e) receiving (38) second information along a plurality of receive beams in response to the broad beam;
(f) generating (40) an image responsive to the second information;
wherein (d), (e) or both (d) and (e) are performed as a function of the aberration correction value.

18. The method of Claim 17 wherein (b) comprises receiving (32) along a fewer number of receive beams than the plurality of receive beams of (e).

19. The method of Claim 18 wherein (b) comprises receiving (32) along a single receive beam and (e) comprises receiving (38) along at least four receive beams.

20. The method of Claim 17 wherein (d) comprises transmitting (36) a plane wave and wherein (e) comprises receiving (38) along at least eight receive beams in response to the plane wave.

21. The method of Claim 17 wherein (a) comprises transmitting (30) in response to a first delay profile to cover a first scan line (52) and wherein (d) comprises transmitting (36) in response to a second delay profile to cover the first scan line (52), the second delay profile different than the first delay profile.

22. A method for aberration correction in ultrasound imaging, the method comprising:
(a) identifying a region automatically with a processor (18); and
(b) focusing (30) a first wavefront at the region;
(c) determining (34) an aberration correction as a function of data responsive to (b); and
(d) generating (40) an image as a function of the aberration correction.

23. The method of Claim 22 wherein (d) comprises:
(d1) transmitting (36) a second wavefront;
(d2) receiving (38) data in response to (d1); and
(d3) performing (d1), (d2) or both (d1) and (d2) as a function of the aberration correction.

24. The method of Claim 22 wherein (a) comprises:
(a1) dividing an image into a plurality of sub-images;
(a2) identifying peaks for each of the sub-images; and
(a3) identifying peaks associated with dark surroundings.

25. The method of Claim 22 wherein (a) comprises identifying the region as a bright isolated target, a thin structure with vertical or radial alignment or combinations thereof.

26. The method of Claim 22 wherein (a) comprises identifying as a function of pattern recognition or image processing.
